# EUROPÄISCHE PATENTANMELDUNG

(11) **EP 1 227 232 A2**
(43) Veröffentlichungstag der Anmeldung: **31.07.2002**
(21) Anmeldenummer: 01130398.9
(22) Anmeldetag: 20.12.2001
(51) Int. Cl.: F02D 41/02, F02D 41/40

(54) **Verfahren zur Wiederherstellung der katalytischen Aktivität eines Katalysators, welcher im Abgastrakt eines Dieselmotors angeordnet ist und wenigstens eine Oxidationsfunktion aufweist**

(30) Priorität: 27.01.2001 DE 10103771
(71) Anmelder: OMG AG & Co. KG, 63457 Hanau (DE)
(72) Erfinder: Hoffmann, Michael, Dr., 63741 Aschaffenburg (DE); Klein, Harald, Dr., 63856 Bessenbach (DE); Kreuzer, Thomas, Dr., 61184 Karben (DE)
(74) Vertreter: Stellbrink, Axel

(57) **Zusammenfassung**

Die Erfindung betrifft ein Verfahren zur Wiederherstellung der katalytischen Aktivität eines Katalysators, welcher im Abgastrakt eines Dieselmotors angeordnet ist und der auf einem Wabenkörper ohne Filterfunktion eine katalytisch aktive Beschichtung enthält, die wenigstens eine Oxidationsfunktion aufweist, und dessen katalytische Aktivität durch Ablagerung von Rußpartikeln und Kohlenwasserstoffen vermindert ist. Das Verfahren ist dadurch gekennzeichnet, daß durch zeitlich begrenztes Erhöhen der Abgastemperatur vor dem Katalysator auf einen Wert über 450 °C die Verbrennung der auf dem Katalysator abgelagerten Rußpartikel und Kohlenwasserstoffe eingeleitet und damit die katalytische Aktivität des Katalysators zumindest teilweise wiederhergestellt wird.

## Beschreibung

Die vorliegende Erfindung betrifft die Abgasreinigung von Dieselmotoren mit Katalysatoren, welche auf einem Wabenkörper ohne Filterfunktion eine katalytisch aktive Beschichtung enthalten, die wenigstens eine Oxidationsfunktion aufweist.

Die Primärschadstoffe von Dieselmotoren sind neben den sehr geringen Mengen an Kohlenwasserstoffen (HC) und Kohlenmonoxid (CO), Stickoxide (NOx) und Partikel (PM). Die Partikel setzen sich aus einem in organischen Lösungsmitteln löslichen und unlöslichen Bestandteil zusammen. Der lösliche Anteil besteht aus einer Vielzahl von verschiedenen Kohlenwasserstoffen, die auf dem Partikelkern kondensiert, beziehungsweise ad- oder absorbiert sind. Der unlösliche Bestandteil ist Schwefeltrioxid oder auch Sulfat, Kohlenstoff, Metallabrieb (zum Beispiel Eisen und Nickel) und in geringen Mengen andere Oxide als Folgeprodukte von Additiven im Schmieröl und im Kraftstoff (zum Beispiel Zink, Calcium, Phosphor). Das Schwefeltrioxid entsteht auch durch Oxidation des Schwefeldioxids am Katalysator in Abhängigkeit von Temperatur, Edelmetallbeladung und Abgasfluß. Ein besonderes Charakteristikum von Dieselmotoren ist ihr hoher Sauerstoffgehalt im Abgas. Während das Abgas von stöchiometrisch betriebenen Benzinmotoren nur etwa 0,7 Vol.-% Sauerstoff enthält, kann das Abgas von Dieselmotoren zwischen 6 und 15 Vol.-% Sauerstoff aufweisen.

Das Mengenverhältnis der verschiedenen Schadstoffe des Dieselabgases zueinander hängt von der Art des Dieselmotors und seiner Betriebsweise ab. Prinzipiell gelten die gemachten Angaben sowohl für stationäre Dieselmotoren als auch für Dieselmotoren in Kraftfahrzeugen für leichte und schwere Anwendungen.

Die zulässigen Emissionen von Dieselmotoren sind durch gesetzliche Obergrenzen festgelegt. Zur Einhaltung dieser Grenzwerte werden je nach Art des Dieselmotors und seiner Betriebsweise verschiedene Konzepte verfolgt.

Für Dieselmotoren geringerer Leistung in Personenkraftwagen ist es häufig ausreichend das Abgas über einen sogenannten Diesel-Oxidationskatalysator zu leiten, der die emittierten Kohlenwasserstoffe, Kohlenmonoxid und zum Teil auch die auf den Rußpartikeln adsorbierten, löslichen organischen Verbindungen verbrennt. Die Oxidationsfunktion der Diesel-Oxidationskatalysatoren ist dabei so ausgelegt, daß sie zwar die organischen Verbindungen und Kohlenmonoxid oxidiert, jedoch nicht die Stickoxide und Schwefeldioxid. Zusammen mit dem restlichen Anteil der Partikel verlassen die Stickoxide und Schwefeldioxid den Katalysator unverändert. Ein typischer Vertreter dieser Katalysatoren wird in der DE 39 40 758 A1 (US 5,157,007) beschrieben.

Zur Verminderung der Emission von Rußpartikeln werden insbesondere bei Dieselmotoren für schwere Anwendungen Rußfilter verwendet. Durch die Ablagerung der Rußpartikel auf dem Filter erhöht sich kontinuierlich der Abgasgegendruck, so daß die Filter in regelmäßigen Abständen durch Abbrennen des Rußes regeneriert werden müssen. Die Rußemission kann durch Optimierung der Verbrennung im Motor vermindert werden. Dies erhöht jedoch automatisch die Emission von Stickoxiden, die daher gesondert durch HC-DeNOx-Katalysatoren oder SCR-Katalysatoren aus dem Abgas entfernt werden müssen. HC-DeNOx-Katalysatoren sind in der Lage, die im Abgas eines Dieselmotors enthaltenen Stickoxide auch in Gegenwart von Sauerstoff unter Verwendung der im Abgas enthaltenen Kohlenwasserstoffe HC zu Stickstoff zu reduzieren. Unter Umständen muß hierfür der Gehalt des Abgases an unverbrannten Kohlenwasserstoffen durch geeignete Maßnahmen erhöht werden.

Eine wesentlich effektivere Entfernung der im Abgas eines Dieselmotors enthaltenen Stickoxide gelingt mit dem Verfahren der selektiven katalytischen Reduktion unter Verwendung von Ammoniak als Reduktionsmittel. Die Reduktion der Stickoxide erfolgt an sogenannte SCR-Katalysatoren. Der benötigte Ammoniak wird gewöhnlich aus hydrolysierbaren Verbindungen wie zum Beispiel Harnstoff mit Hilfe eines Hydrolysekatalysators gewonnen.

In Abhängigkeit von der Betriebsweise des Fahrzeugs und damit der Drehzahl des Motors und der Last stellen sich die Abgasmengen, die Abgaszusammensetzung und die Abgastemperatur ein. Die Entwicklung von Dieselmotoren hat durch Optimierung der Verbrennung zu einer Verminderung der Abgastemperaturen geführt. Die Abgastemperatur von modernen Dieselmotoren beträgt zum Beispiel im Teillastbereich nur noch 80 bis 150 °C. Nur bei Vollast steigt die Abgastemperatur über 450 °C an.

Es wurde von den Erfindern beobachtet, daß bei der Reinigung der Abgase moderner Dieselmotoren mit Hilfe eines Diesel-Oxidationskatalysators die katalytische Aktivität schneller als erwartet abnahm, obwohl wegen der geringen Abgastemperaturen keine thermische Schädigung der katalytisch aktiven Schicht vorliegen konnte. Post mortem Untersuchungen durch die Erfinder zeigten, daß die vorzeitige Alterung offensichtlich auf die geringen Abgastemperaturen zurückzuführen sind. Infolge der geringen Abgastemperaturen lagern sich unverbrannte Kohlenwasserstoffe und Partikel auf der katalytischen Beschichtung ab und vermindern damit die katalytischen Aktivität der Beschichtung.

Aufgabe der vorliegenden Erfindung war es daher, ein Verfahren anzugeben, mit dem die katalytischen Aktivität eines für die Reinigung von Dieselabgasen eingesetzten Katalysators zumindest teilweise wiederhergestellt werden kann.

Diese Aufgabe wird durch ein Verfahren zur Wiederherstellung der katalytischen Aktivität eines Katalysators gelöst, welcher im Abgastrakt eines Dieselmotors angeordnet ist und der auf einem Wabenkörper ohne Filterfunktion eine katalytisch aktive Beschichtung enthält, die wenigstens eine Oxidationsfunktion aufweist. Das Verfahren ist dadurch gekennzeichnet, daß durch zeitlich begrenztes Erhöhen der Abgastemperatur vor dem Katalysator auf einen Wert über 450 °C die Verbrennung der auf dem Katalysator abgelagerten Rußpartikel und Kohlenwasserstoffe eingeleitet und damit die katalytische Aktivität des Katalysators zumindest teilweise wiederhergestellt wird.

Die post mortem Untersuchungen der Erfinder zeigten, daß die Verminderung der katalytischen Aktivität des Katalysators vor allem durch Abdecken der katalytisch aktiven Zentren durch Rußpartikel mit darauf adsorbierten Kohlenwasserstoffen verursacht wird. Mehrere solcher Teilchen oder Kombinationen mit Partikeln anderer Zusammensetzung kleben zusammen und verstopfen damit die Poren und erniedrigen somit die aktive Oberfläche des Katalysators. Dadurch wird eine Verschlechterung der Oxidationskraft des Katalysators hervorgerufen.

Zusätzlich vergiften andere Komponenten des Abgases den Katalysator durch Abdekkung oder Reaktion mit den Bestandteilen der katalytischen Beschichtung. Beispielsweise reagieren Schwefeloxide mit den Bestandteilen der Beschichtung und bilden Sulfate. Phosphorverbindungen erzeugen auf der Katalysatoroberfläche einen glasartigen Überzug. Durch diese Effekte kann die katalytische Aktivität so weit beeinträchtigt werden, daß die Emissionsgrenzwerte nicht mehr eingehalten werden können.

Es wurde beobachtet, daß die katalytische Aktivität durch die vorgeschlagenen Maßnahmen nur teilweise wiederhergestellt werden kann. Neben einer reversiblen Schädigung tritt also auch eine permanente Schädigung des Katalysators auf.

Die für die Regeneration erforderlichen hohen Abgastemperaturen von über 450°C treten spontan bei Betriebsphasen des Motors unter Vollast auf, zum Beispiel bei schnellen Fahrten auf der Autobahn. Der Abbrand des abgelagerten Rußes und der Kohlenwasserstoffe kann dabei spontan gezündet werden. Hierbei besteht aber die Gefahr, daß durch unkontrolliertes Abbrennen die Temperaturen im Katalysator über 800 °C ansteigen und den Katalysator permanent schädigen. Die von den Erfindern beobachtete permanente Schädigung des Katalysators kann zum Teil auch auf solche Ereignisse zurückgeführt werden. Eine schonende Regeneration des Katalysators ohne unkontrolliertes Zünden von Ablagerungen kann im normalen Fahrbetrieb nicht sichergestellt werden.

Bevorzugt werden daher die für die Regeneration erforderlichen hohen Temperaturen des Katalysators bewußt erzeugt. Hierfür eignen sich verschiedene Verfahren wie zum Beispiel das Nacheinspritzen von Kraftstoff in die Zylinder des Motors, das Einstellen einer späten Verbrennungslage am Motor, eine mehrstufige Verbrennung, eine externe Beheizung des Katalysators oder die Erwärmung des Katalysators durch einen vor dem Katalysator angeordneten Brenner.

Die Nacheinspritzung dient zur Erhöhung des Gehaltes des Abgases an unverbranntem Kraftstoff. Zu diesem Zweck wird zusätzlicher Kraftstoff nach der eigentlichen Verbrennung bei noch geschlossenen oder bereits geöffneten Auslaßventilen in den Verbrennungsraum des Motors eingespritzt. Der unverbrannte oder nur teilweise verbrannte Kraftstoff gelangt über die Abgasleitung zum Katalysator und wird dort katalytisch oxidiert. Die dabei auftretende Exothermie heizt das Abgas und damit auch den Katalysator auf. Das Common Rail Einspritzsystem und auch Pumpe-Düse Motoren sind in der Lage, eine Nacheinspritzung von Kraftstoff vorzunehmen.

Zusätzlicher Kraftstoff kann aber auch über einen Injektor direkt in die Abgasleitung vor dem Katalysator eingespritzt werden. Wie oben beschrieben führt dies zu einer Erhöhung der Temperatur des Katalysators.

Zur Temperaturerhöhung durch späte Verbrennungslage wird der Schwerpunkt der Verbrennung von 7° nach OT (oberer Totpunkt) nach hinten zu einem späteren Zeitpunkt verschoben (zum Beispiel 14° nach OT). Dies geschieht bei noch geschlossenen Auslaßventilen. Die Verbrennung setzt sich dann bis nach dem Öffnen der Auslaßventile fort, was ebenfalls eine Erhöhung der Abgastemperaturen bewirkt.

Bei der mehrstufigen Verbrennung wird die Einspritzung des Kraftstoffes in mehreren Stufen vorgenommen. Werden nur drei Stufen vorgesehen, so wird von einer Vor-, Haupt- und Nacheinspritzung gesprochen. Auch durch diese Vorgehensweise kann die Abgastemperatur erhöht werden.

Weitere motorische Maßnahmen zur Erhöhung der Abgastemperatur sind denkbar, wie die Öffnung der Turbinenschaufeln des Turboladers. Der Ladedruck fällt ab und dadurch sinkt der Wirkungsgrad. Dies wiederum führt zu einer Erhöhung der Abgastemperatur, da bei gleicher Leistung mehr Kraftstoff verbrannt werden muß. Auch durch AGR (Abgasrückführung) kann Einfluß auf die Abgastemperatur genommen werden.

Das ungewollte, unkontrollierte Abbrennen der Ablagerungen auf dem Katalysator kann dadurch vermieden werden, daß die Wiederherstellung der katalytischen Aktivität regelmäßig nach jeweils 100 bis 1.000 Stunden Betriebsdauer des Motors oder jeweils nach einer Fahrleistung von 500 bis 15.000 km vorgenommen wird. Das optimale Regenerationsintervall hängt von der zu erwartenden Menge an Ablagerungen ab. Die regelmäßige Regeneration der katalytischen Aktivität vermeidet eine zu starke Ablagerung von brennbaren Komponenten und begrenzt somit die mögliche Exotherme auf für den Katalysator unschädliche Werte. Dies stellt einen wichtigen Beitrag zum Schutz des Katalysators vor thermischer Schädigung dar und erhöht seine Lebensdauer.

Alternativ zur regelmäßigen Regeneration kann die Wiederherstellung der katalytischen Aktivität immer dann eingeleitet werden, wenn in einem bestimmten Betriebspunkt des Motors der Gehalt des Abgases an Kohlenmonoxid hinter dem Katalysator einen vorgegebenen Grenzwert überschreitet. Zu diesem Zweck kann hinter dem Katalysator ein Kohlenmonoxidsensor in den Abgasstrang eingebaut werden.

Durch die bisher vorgeschlagenen Maßnahmen lassen sich die auf dem Katalysator abgelagerten Sulfate leider nicht entfernen. Die Ablagerung der Sulfate auf dem Katalysator geht abhängig vom Schwefelgehalt des Kraftstoffes nur wesentlich langsamer vonstatten als die Ablagerung von Ruß und Kohlenwasserstoffen. Soll der Katalysator trotzdem von Zeit zu Zeit desulfatisiert werden, so werden hierfür Abgastemperaturen über 600 °C und reduzierende Abgasbedingungen benötigt. Deshalb kann vorgesehen werden, alle 5 bis 50 Regenerationszyklen die Abgastemperatur auf über 600 °C anzuheben und das Abgas zur Zersetzung der Sulfate kurzzeitig anzufetten.

Durch das vorgeschlagene Verfahren kann die Lebensdauer eines Diesel-Oxidationskatalysators wesentlich verlängert werden. Es ist jedoch nicht auf die Anwendung bei Diesel-Oxidationskatalysatoren beschränkt. Vielmehr läßt es sich bei allen für die Abgasreinigung von Dieselmotoren vorgeschlagenen Katalysatoren einsetzen, die eine Oxidationsfunktion aufweisen. Dabei handelt es sich zum Beispiel um SCR-Katalysatoren, Hydrolysekatalysatoren, HC-DeNOx-Katalysatoren oder Vierweg-Katalysatoren.

SCR-Katalysatoren werden zum Beispiel in den europäischen Patentschriften EP 0 376 025 B1 (US 5,116,586 ) und EP 0 385 164 B1 (US 5,198,403) beschrieben. Gemäß der EP 0 376 025 B 1 können für die selektive katalytische Reduktion Katalysatoren auf der Basis von säurebeständigen Zeolithen eingesetzt werden, die mit den Metallen Eisen, Kupfer, Cer und Molybdän ausgetauscht sein können. Dagegen beschreibt die EP 0 385 164 B1 Katalysatoren für die selektive katalytische Reduktion, die hauptsächlich aus Titanoxid bestehen, welches in Abmischung mit verschiedenen anderen Oxiden eingesetzt wird. Gemäß der genannten Patentschrift enthalten die Reduktionskatalysatoren Titanoxid und mindestens ein Oxid von Wolfram Silicium, Bor, Aluminium, Phosphor, Zirkon, Barium, Yttrium, Lanthan und Cer und als zusätzliche Komponenten mindestens ein Oxid von Vanadium, Niob, Molybdän, Eisen und Kupfer. Besonders diese zusätzlichen Komponenten verleihen dem Katalysator gute Reduktionseigenschaften in sauerstoffhaltigen Abgasen.

Als Hydrolysekatalysator dienen gewöhnlich Oxide mit Feststoffsäureeigenschaften, die Titandioxid, Aluminiumoxid, Siliciumdioxid oder deren Mischphasen und Verbindungen untereinander als Matrixoxid enthalten, wobei die Säureeigenschaften durch Zusatz von Oxiden fünf- und sechswertiger Elemente, wie SO₃ und WO₃, als Stabilisatoren und zur Verstärkung der Aktivität herangezogen werden. Als geeignete Aktivkomponenten eines Hydrolysekatalysators werden in der DE 42 03 807 A1 Mischungen von Aluminiumoxid mit Titanoxid, Siliciumdioxid, Zirkondioxid und/oder H-Zeolithen im Gewichtsverhältnis zwischen Aluminiumoxid und den anderen Oxiden von 90:10 bis 10:90 genannt.

Als HC-DeNOx-Katalysator wird ein Katalysator bezeichnet, der im mageren Abgas eines Verbrennungsmotors in der Lage ist, Stickoxide unter Verwendung von im Abgas enthaltenen, unverbrannten Kohlenwasserstoffen zu Stickstoff, Wasser und Kohlendioxid umzusetzen. Ein geeigneter Katalysator hierfür wird zum Beispiel in der DE 196 14 540 A1 (US 5,928,981) beschrieben. Er enthält als katalytisch aktive Komponente wenigstens ein Platingruppenmetall, bevorzugt Platin, welches auf einem hochoberflächigen Aluminiumsilikat als Trägermaterial abgeschieden ist. Außerdem enthält der Katalysator noch verschiedene Zeolithe, die auf Grund ihrer sauren Oberflächeneigenschaften in der Lage sind, auch langkettige, organische Moleküle, die an Rußpartikeln adsorbiert sind, zu cracken. Dieser Katalysator wird auch als Vierweg-Katalysator bezeichnet, weil er neben der Umsetzung von Kohlenmonoxid, Kohlenwasserstoffen und Stickoxiden als vierte Komponente auch die Menge der Rußpartikel vermindern kann.

## Patentansprüche

1. Verfahren zur Wiederherstellung der katalytischen Aktivität eines Katalysators, welcher im Abgastrakt eines Dieselmotors angeordnet ist und der auf einem Wabenkörper ohne Filterfunktion eine katalytisch aktive Beschichtung enthält, die wenigstens eine Oxidationsfunktion aufweist, und dessen katalytische Aktivität durch Ablagerung von Rußpartikeln und Kohlenwasserstoffen vermindert ist,
**dadurch gekennzeichnet,**
**daß** durch zeitlich begrenztes Erhöhen der Abgastemperatur vor dem Katalysator auf einen Wert über 450 °C die Verbrennung der auf dem Katalysator abgelagerten Rußpartikel und Kohlenwasserstoffe eingeleitet und damit die katalytische Aktivität des Katalysators zumindest teilweise wiederhergestellt wird.

2. Verfahren nach Anspruch 1,
**dadurch gekennzeichnet,**
**daß** die Abgastemperatur vor dem Katalysator durch Nacheinspritzung von Kraftstoff, durch späte Verbrennungslage, durch mehrstufige Verbrennung, durch externe Beheizung oder durch einen vor dem Katalysator angeordneten Brenner auf den für die Wiederherstellung der katalytischen Aktivität erforderlichen Wert erhöht wird.

3. Verfahren nach Anspruch 2,
**dadurch gekennzeichnet,**
**daß** die Wiederherstellung der katalytischen Aktivität regelmäßig nach jeweils 100 bis 1.000 Stunden Betriebsdauer des Motors oder jeweils nach einer Fahrleistung von 500 bis 15.000 km vorgenommen wird.

4. Verfahren nach Anspruch 2,
**dadurch gekennzeichnet,**
**daß** die Wiederherstellung der katalytischen Aktivität immer dann eingeleitet wird, wenn in einem bestimmten Betriebspunkt des Motors der Gehalt des Abgases an Kohlenmonoxid hinter dem Katalysator einen vorgegebenen Grenzwert überschreitet.

5. Verfahren nach Anspruch 3 oder 4,
**dadurch gekennzeichnet,**
**daß** nach jeder 5. bis 50. Wiederherstellung der katalytischen Aktivität die Abgastemperatur auf Werte über 600 °C angehoben und das Abgas zur Zersetzung der Sulfate kurzzeitig angefettet wird.

6. Verfahren nach Anspruch 1,
**dadurch gekennzeichnet,**
**daß** es sich bei dem Katalysator um einen Dieseloxidationskatalysator, einen SCR-Katalysator, einen Hydrolysekatalysator, einen HC-Denox-Katalysator oder einen Vierweg-Katalysator handelt.
